# EUROPÄISCHE PATENTSCHRIFT

(11) **EP 1 214 703 B1**
(45) Veröffentlichungstag und Bekanntmachung des Hinweises auf die Patenterteilung: **17.03.2004**
(21) Anmeldenummer: 00969212.0
(22) Anmeldetag: 29.08.2000
(51) Int. Cl.: G10L 13/08

(54) **VERFAHREN ZUM TRAINIEREN DER GRAPHEME NACH PHONEMEN REGELN FÜR DIE SPRACHSYNTHESE**
METHOD FOR TRAINING GRAPHEMES ACCORDING TO PHONEME RULES FOR VOICE SYNTHESIS
PROCEDE D'APPRENTISSAGE DES GRAPHEMES D'APRES DES REGLES DE PHONEMES POUR LA SYNTHESE VOCALE

(30) Priorität: 03.09.1999 DE 19942178
(43) Veröffentlichungstag der Anmeldung: 19.06.2002
(73) Patentinhaber: SIEMENS AKTIENGESELLSCHAFT, 80333 München (DE)
(72) Erfinder: HAIN, Horst-Udo, 81825 München (DE)
(86) Internationale Anmeldenummer: PCT/DE2000/002940
(87) Internationale Veröffentlichungsnummer: WO 2001/018792

(56) Entgegenhaltungen:
- LUK R W P ET AL: "INFERENCE OF LETTER-PHONEME CORRESPONDENCES BY DELIMITING AND DYNAMIC TIME WARPING TECHNIQUES" PROCEEDINGS OF THE INTERNATIONAL CONFERENCE ON ACOUSTICS, SPEECH AND SIGNAL PROCESSING (ICASSP),US,NEW YORK, IEEE, vol. CONF. 17, 23 March 1992 (1992-03-23), pages 61-64, XP000356937 ISBN: 0-7803-0532-9
- OAKEY S ; CAWTHORN R.C.: "Inductive learning of pronunciation rules by hypothesis testing and correction" PROCEEDINGS OF THE 7TH JOINT CONFERENCE ON ARTIFICIAL INTELLIGENCE IJCAI-81, 24 - 28 August 1981, pages 109-114, XP000980278 Vancouver (Canada)
- TORKKOLA K ET AL: "DYNAMICALLY EXPANDING CONTEXT VS. MULTI-LAYERED NETWORKS IN CORRECTION OF PHONEME STRINGS" PROCEEDINGS OF THE EXPERT SYSTEMS APPLICATIONS WORLD CONFERENCE,FR,GOURNAY SUR MARNE, IITT INTERNATIONAL, vol. CONF. 1, 1989, pages 333-337, XP000091093
- T. DUTOIT: "Introduction To Text-To-Speech Synthesis ntroduction To Text-To-Speech Synthesis " 1997 , KLUWERS ACADEMIC XP002157980 paragraph [5.4.3]

## Beschreibung

Die Erfindung betrifft ein Verfahren zum Aufbereiten einer Datenbank für die automatische Sprachverarbeitung, sowie ein Verfahren zum Trainieren eines neuronalen Netzwerkes zum Zuordnen von Graphemen zu Phonemen für die automatische Sprachverarbeitung und ein Verfahren zum Zuordnen von Graphemen zu Phonemen bei der Synthetisierung von Sprache bzw. bei der Erkennung von Sprache.

Ein bekanntes Verfahren zum Zuordnen von Graphemen zu Phonemen ist in der Schrift Robert W.P. Luc et al.: "Interference of Letter-Phoneme Correspondences by Delimiting and Dynamic Time Warping Techniques", ICASSP' 92, Seiten II-61 bis II-64 (1992) offenbart.

Es ist bekannt, neuronale Netzwerke für die Synthetisierung von Sprache zu verwenden, wobei die neuronalen Netzwerke einen Text, der in einer Folge von Graphemen dargestellt ist, in Phoneme umsetzen, welche von einer entsprechenden Sprachausgabevorrichtung in die korrespondierenden akustischen Laute gewandelt werden. Grapheme sind Buchstaben beziehungsweise Buchstabenkombinationen, welchen jeweils ein Laut, das Phonem, zugeordnet ist. Vor einem erstmaligen Einsatz des neuronalen Netzwerkes muß dieses trainiert werden. Dies erfolgt üblicherweise durch Verwendung einer Datenbank, die die Graphem-Phonem-Zuordnungen enthält, wodurch festgelegt ist, welchem Graphem welches Phonem zugeordnet ist.

Die Erstellung einer solchen Datenbank bedeutet einen erheblichen zeitlichen wie auch geistigen Aufwand, da derartige Datenbanken in der Regel nur mit Hilfe eines Sprachexperten aufgebaut werden können.

Der Erfindung liegt die Aufgabe zugrunde ein Verfahren zu schaffen, mit welchen auf einfache Art und Weise eine Graphem-Phonem-Zuordnungen enthaltende Datenbank erstellt werden kann.

Die Aufgabe wird durch ein Verfahren mit den Merkmalen des Anspruchs 1 gelöst. Vorteilhafte Ausgestaltungen der Erfindung sind in den Unteransprüchen angegeben.

Das erfindungsgemäße Verfahren zum Aufbereiten einer Datenbank für die automatische Sprachverarbeitung geht von einer Datenbank aus, die Wörter in Form von Graphemen und Phonemen enthält. Für die meisten Sprachen existieren bereits derartige Datenbanken. Diese Datenbanken sind Wörterbücher, die die Wörter in Schreibschrift (Grapheme) und in Lautschrift (Phoneme) enthalten. Diesen Datenbanken fehlt jedoch die Zuordnung der einzelnen Phoneme zu den entsprechenden Graphemen. Diese Zuordnung wird erfindungsgemäß automatisch durch die folgenden Schritte ausgeführt:
a) Zuordnen der Grapheme zu den Phonemen aller Wörter, die dieselbe Anzahl Grapheme und Phoneme besitzen, wobei die Grapheme und Phoneme einander paarweise zugeordnet werden,
b) Zuordnen der Grapheme zu den Phonemen aller Wörter, die mehr Grapheme als Phoneme besitzen, wobei zunächst alle Grapheme den Phonemen paarweise zugeordnet werden, bis sich ein Zuordnungsfehler auf Grundlage der bisher ermittelten Zuordnungen ergibt oder lediglich am Wortende ein oder mehrere Grapheme vorhanden sind, welchen kein Phonem zugeordnet ist, und Zusammenfassen mehrerer Grapheme zu einer Graphemeinheit und Zuordnen der Graphemeinheit zu einem Phonem, und
c) Zuordnen der Grapheme zu den Phonemen aller Wörter, die weniger Grapheme als Phoneme besitzen, wobei mehrere Phoneme zu einer Phonemeinheit zusammengefaßt werden und ihnen ein einziges Graphem derart zugeordnet wird, daß die übrigen Graphem-Phonem-Zuordnungen des zu analysierenden Wortes den unter a) und b) gefundenen Zuordnungen entspricht,
d) Zuordnen der bisher nicht zuordbaren Wörter, wobei die Wörter nach den unter c) ermittelten Phonemeinheiten und/oder den unter b) ermittelten Graphemeinheiten von neuem untersucht werden und die Grapheme zu den Phonemen unter Berücksichtigung der Phonemeinheiten im Fall c) und der Graphemeinheiten im Fall b) zugeordnet werden, und
wobei zumindest nach Schritt a) ein Korrekturschritt ausgeführt wird, mit dem Zuordnungen von Wörtern, die im Widerspruch zu den im Schritt a) ermittelten weiteren Zuordnungen stehen, gelöscht werden.

Erfindungsgemäß werden zunächst Wörter untersucht, die dieselbe Anzahl Grapheme und Phoneme besitzen. Die Grapheme dieser Wörter werden den Phonemen paarweise zugeordnet, wobei in einem darauffolgenden Korrekturschritt die Zuordnungen der Wörter gelöscht werden, die im Widerspruch zu den weiteren Zuordnungen stehen.

Mit diesem ersten Zuordnungsvorgang kann eine Großzahl der Wörter abgearbeitet werden und zudem statistisch signifikante Zuordnungen erzielt werden, die eine Überprüfung im Korrekturschritt erlauben und die auch eine Überprüfung der weiteren zu erstellenden Zuordnungen in den nachfolgenden Schritten erlauben.

Danach werden die Wörter untersucht, bei denen sich die Anzahl der Phoneme gegenüber der Anzahl von Graphemen unterscheidet. Bei Wörtern mit mehr Graphemen als Phonemen werden mehrere Grapheme zu Graphemeinheiten zusammengefaßt und bei Wörtern mit weniger Graphemen als Phonemen werden Phoneme zu Phonemeinheiten zusammengefaßt.

Nach Beendigung dieser Schritte werden die bisher nicht zuordbaren Wörter überprüft, wobei hierbei die ermittelten Phonemeinheiten und/oder die ermittelten Graphemeinheiten berücksichtigt werden.

Mit dem erfindungsgemäßen Verfahren wird somit schrittweise automatisch ein "Zuordnungswissen" erstellt, das zunächst auf paarweisen Graphem-Phonem-Zuordnungen beruht und in das im Laufe des Verfahrens auch Graphemeinheiten und Phonemeinheiten einbezogen werden.

Das erfindungsgemäße Verfahren kann für jede beliebige Sprache angewandt werden, für die bereits eine elektronisch lesbare Datenbank besteht, die Wörter in Form von Graphemen und Phonemen enthält, wobei eine Zuordnung zwischen den Phonemen und Graphemen nicht notwendig ist. Der Einsatz von Expertenwissen ist nicht erforderlich, da das erfindungsgemäße Verfahren vollautomatisch ausgeführt wird.

Mit der erfindungsgemäß erstellten Datenbank kann dann ein neuronales Netzwerk trainiert werden, mit dem die Graphem-Phonem-Zuordnungen bei der Synthetisierung oder Erkennung von Sprache automatisch ausgeführt werden.

Die Erfindung wird nachfolgend näher anhand eines Ausführungsbeispieles erläutert, das in den Zeichnungen dargestellt ist. In diesen zeigen:
- Fig. 1: ein Ausführungsbeispiel des erfindungsgemäßen Verfahrens in einem Flußdiagramm,
- Fig. 2: schematisch ein neuronales Netzwerk zum Zuordnen von Graphemen zu Phonemen, und
- Fig. 3: schematisch eine Vorrichtung zur Ausführung des erfindungsgemäßen Verfahrens.

Das erfindungsgemäße Verfahren dient zum Aufbereiten einer Datenbank für die Sprachsynthese, wobei von einer Ausgangsdatenbank ausgegangen wird, die Wörter in Form von Graphemen und Phonemen enthält. Eine solche Ausgangsdatenbank ist jedes Wörterbuch, das die Wörter sowohl in Schreibschrift (Grapheme) als auch in Lautschrift (Phoneme) enthält. Diese Wörterbücher enthalten jedoch keine Zuordnung der einzelnen Grapheme zu den jeweiligen Phonemen. Sinn und Zweck des erfindungsgemäßen Verfahrens ist die Erstellung einer solchen Zuordnung.

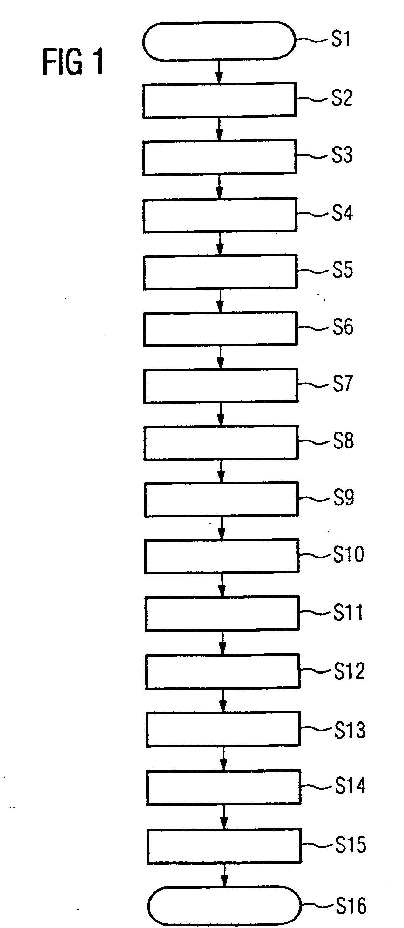

In Fig. 1 ist ein Ausführungsbeispiel des erfindungsgemäßen Verfahrens in einem Flußdiagramm dargestellt. In einem Schritt S1 wird das Verfahren gestartet.

Im Schritt S2 werden alle Wörter untersucht, die die gleiche Anzahl Grapheme und Phoneme besitzen. Die Grapheme dieser Wörter werden den entsprechenden Phonemen paarweise zugeordnet.

Eine derartige paarweise Zuordnung wird z.B. für das englische Wort "run" ausgeführt, das folgendermaßen mit seinen Graphemen und Phonemen dargestellt werden kann:

| | | | |
|---|---|---|---|
| Grapheme | r | u | n |
| Phoneme | r | A | n |

Bei "run" wird das Graphem "r" dem Phonem "r", das Graphem "u" dem Phonem "A" und das Graphem "n" dem Phonem "n" zugeordnet. Bei dieser paarweisen Zuordnung wird somit jeweils ein einziges Graphem einem einzigen Phonem zugeordnet. Dies wird für alle Wörter ausgeführt, die die gleiche Anzahl von Phoneme und Grapheme besitzen.

Im nachfolgenden Schritt S3 wird eine Korrektur ausgeführt, mit der die Zuordnungen der Wörter, die im Widerspruch zu dem im Schritt S2 ermittelten weiteren Zuordnungen stehen, gelöscht werden. Hierzu werden die Häufigkeiten der einzelnen Graphem-Phonem-Zuordnungen erfaßt und Graphem-Phonem-Zuordnungen die nur selten vorkommen werden gelöscht. Liegt die Häufigkeit einer bestimmten Graphem-Phonem-Zuordnung unter einem vorbestimmten Schwellwert, so werden die entsprechenden Graphem-Phonem-Zuordnungen gelöscht. Der Schwellwert liegt z.B. im Bereich von einer Häufigkeit von 10 bis 100. Je nach Umfang des Vokabulars der Ausgangsdatenbank kann der Schwellwert entsprechend angepaßt werden, wobei bei größeren Ausgangsdatenbanken ein höherer Schwellwert als bei kleineren Ausgangsdatenbanken zweckmäßig ist.

Ein Beispiel für eine derartige widersprüchliche Graphem-Phonem-Zuordnung ist das englische Wort "fire":

| | | | | |
|---|---|---|---|---|
| Grapheme | f | i | r | e |
| Phoneme | f | I | @ | r |

Die Zuordnung des Graphems "r" zum Phonem "@"und die Zuordnung des Graphems "e" zum Phonem "r" sind nicht korrekt zugeordnet. Diese beiden Zuordnungen treten sehr selten auf, weshalb ihre Häufigkeit kleiner als der Schwellwert ist, so daß sie im Schritt S3 gelöscht werden. Zudem wird im Schritt S3 das Wort "fire" wieder als nicht-zugeordnet markiert, so daß es in einem späteren Zuordnungsschritt wieder untersucht werden kann.

Im Schritt S4 werden Wörter untersucht, die mehr Grapheme als Phoneme besitzen, wobei jeweils ein Graphem einem Phonem in Leserichtung (von links nach rechts) zugeordnet wird und die verbleibenden Grapheme mit dem letzten Graphem, dem ein Phonem zugeordnet worden ist, zu einer Graphemeinheit zusammengefaßt werden. Ein Beispiel eines Wortes, das auf diese Art und Weise korrekt zugeordnet wird, ist das englische Wort "aback":

| | | | | |
|---|---|---|---|---|
| Grapheme | a | b | a | ck |
| Phoneme | x | b | @ | k |

Im hierauf folgenden Schritt S5 wird wiederum eine Korrektur ausgeführt, mit der Zuordnungen gelöscht werden, die im Widerspruch zu den bisher ermittelten Zuordnungen stehen, das heißt, Zuordnungen, die nur eine geringe Häufigkeit aufweisen. Der Schritt S5 ist diesbezüglich identisch mit dem Schritt S3.

Im Schritt S6 werden die Wörter, die mehr Grapheme als Phoneme besitzen und im Schritt S4 nicht korrekt zugeordnet werden konnten, von neuem untersucht, wobei jeweils ein einzelnes Graphem einem einzelnen Phonem in Leserichtung (von links nach rechts) zugeordnet wird. Jede einzelne Zuordnung wird überprüft, ob sie den bisher ermittelten Zuordnungen entspricht. Ergibt diese Überprüfung, daß eine Graphem-Phonem-Zuordnung nicht den bisherigen Zuordnungen entspricht, das heißt, daß sie nicht die notwendige Häufigkeit besitzt, geht das Verfahren auf die letzte Graphem-Phonem-Zuordnung zurück und verbindet das Graphem dieser Graphem-Phonem-Zuordnung mit dem in Leserichtung nächstem Graphem zu einer Graphemeinheit. Die übrigen Phoneme und Grapheme werden dann wieder einander einzeln zugeordnet, wobei wiederum jede einzelne Graphem-Phonem-Zuordnung überprüft wird.

Bei diesem Verfahrensschritt können innerhalb eines Wortes eine oder mehrere Graphemeinheiten erzeugt werden, wobei die Graphemeinheiten in der Regel zwei Grapheme umfassen. Es ist jedoch auch möglich, daß die Graphemeinheiten drei oder mehr Grapheme umfassen können.

Ein Wort, bei dem der Schritt S6 zu einer erfolgreichen Zuordnung führt ist z.B. das englische Wort "abasement":

| | | | | | | | | |
|---|---|---|---|---|---|---|---|---|
| Grapheme | a | b | a | se | m | e | n | t |
| Phoneme | x | b | e | s | m | i | n | t |

Bei "abasement" erfolgt die paarweise Zuordnung korrekt bis zum Graphem "e" das zunächst dem Phonem "m", zugeordnet wird. Diese Zuordnung steht im Widerspruch zu den bisher ermittelten Zuordnungen, weshalb das Verfahren auf die letzte erfolgreiche Zuordnung des Graphems "s" zum Phonem "s" zurückgeht und das Graphem "s" mit dem Graphem "e" zur Graphemeinheit "se" verbindet. Die weitere paarweise Zuordnung der Grapheme zu den Phonemen entspricht wieder den bisher ermittelten Zuordnungen, weshalb sie dementsprechend ausgeführt werden.

Im Schritt S7 werden die im Schritt S6 untersuchten Wörter, die nicht vollständig erfolgreich zugeordnet worden sind, markiert und deren Zuordnungen werden wiederum gelöscht.

Im Schritt S8 werden die Wörter, die mehr Grapheme als Phoneme besitzen und in den Schritten S4 und S6 nicht korrekt zugeordnet werden konnten, von Neuem untersucht, wobei jeweils ein einzelnes Graphem einem einzelnen Phonem zunächst in Leserichtung (von links nach rechts) zugeordnet wird. Jede einzelne Zuordnung wird wiederum überprüft, ob sie den bisher ermittelten Zuordnungen entspricht. Ergibt diese Überprüfung, daß eine Graphem-Phonem-Zuordnung nicht den bisherigen Zuordnungen entspricht, das heißt, daß die Zahl der Häufigkeit unter einem vorbestimmten Schwellwert liegt, werden entgegen der Leserichtung (von rechts nach links) einzelne Grapheme einzelnen Phonemen zugeordnet. Bleibt bei dieser Methode lediglich ein Phonem über, dem kein Graphem zugeordnet werden kann, so werden die restlichen Grapheme zu einer Graphemeinheit zusammengefaßt und dem einen Phonem zugeordnet.

Bei diesem Verfahrensschritt kann innerhalb eines Wortes eine Graphemeinheit erzeugt werden.

Ein Wort, bei dem der Schritt S8 zu einer erfolgreichen Zuordnung führt, ist z.B. das englische Wort "amongst":

| | | | | | | |
|---|---|---|---|---|---|---|
| Grapheme | a | m | o | ng | s | t |
| Phoneme | x | m | A | G | s | t |

Bei "amongst" erfolgt die paarweise Zuordnung von links nach rechts korrekt bis zum Graphem "n", das zunächst dem Phonem "G" zugeordnet wird. Diese Zuordnung steht im Widerspruch zu den bisher ermittelten Zuordnungen, weshalb eine paarweise Zuordnung von rechts nach links ausgeführt wird. Diese Zuordnung verläuft korrekt bis zum Graphem "g" das zunächst dem Phonem "G" zugeordnet wird. Diese Zuordnung steht im Widerspruch zu den bisher ermittelten Zuordnungen. Als einziges Phonem dem kein Graphem zugeordnet werden kann, verbleibt das Phonem "G". Diesem Phonem "G" werden nun die restlichen Grapheme "n" und "g", die zu einer Graphemeinheit zusammengefaßt werden, zugeordnet.

Im Schritt S9 werden die im Schritt S8 untersuchten Wörter, die nicht vollständig erfolgreich zugeordnet worden sind, markiert und deren Zuordnungen werden wiederum gelöscht.

Im Schritt S10 werden die Wörter, die weniger Grapheme als Phoneme besitzen untersucht, wobei die einzelnen Grapheme den einzelnen Phonemen paarweise zugeordnet werden, wobei die Grapheme auch den zu den zugeordneten Phonemen benachbarten Phonemen zugeordnet werden. Von all diesen Zuordnungen wird die jeweilige Häufigkeit bestimmt, und falls festgestellt wird, daß ein Graphem zwei benachbarten Phonemen mit einer großen Häufigkeit zugeordnet werden kann, werden diese beiden Phoneme zu einer Phonemeinheit zusammengefaßt, falls die beiden Phoneme zwei Vokale oder zwei Konsonanten sind.

Ein Wort, bei dem der Schritt S9 zu einer korrekten Zuordnung führt, ist z.B. das englische Wort "axes":

| | | | | |
|---|---|---|---|---|
| Grapheme | a | x | e | s |
| Phoneme | @ | ks | i | z |

Bei "axes" ergibt die Zuordnungen des Graphems "x" zu den Phonemen "k" und "s" jeweils eine Häufigkeit, die über einem vorbestimmten Schwellwert liegt, so daß diese beiden Phoneme zur Phonemeinheit "ks" zusammengefaßt werden. Die übrigen Grapheme und Phoneme werden wiederum paarweise zugeordnet.

Im Schritt S10 ist es auch möglich, daß mehrere Phonemeinheiten gebildet werden oder daß die Phonemeinheiten auch mehr als zwei Phoneme umfassen.

Im Schritt S11 wird wiederum eine Korrektur durchgeführt, bei der die Zuordnungen, die selten auftreten, gelöscht werden, und die Wörter in denen diese widersprüchlichen Zuordnungen festgestellt worden sind als nicht-zugeordnet markiert werden. Der Schritt S11 entspricht im wesentlichen den Schritten S3 und S5, wobei hier jedoch auch die bis zum Schritt S10 ermittelten Graphem-Phonem-Zuordnungen berücksichtigt werden.

Der Schritt S12 entspricht im wesentlichen dem Schritt S10, das heißt, daß Phonemeinheiten aus benachbarten Phonemen gebildet werden, wobei im Schritt S12 die Phonemeinheiten nicht auf zwei Konsonanten oder zwei Vokale beschränkt sind, sondern auch eine Mischung aus Vokalen und Konsonanten beinhalten können.

Im Schritt S13 wird wiederum ein Korrekturvorgang durchgeführt, der dem des Schrittes S11 entspricht, wobei alle mittlerweile ermittelten Graphem-Phonem-Zuordnungen berücksichtigt werden.

Im Schritt S14 werden die in den Schritten S10 und S12 ermittelten Phonemeinheiten verwendet, um Wörter, deren Grapheme nicht den Phonemen korrekt zugeordnet werden konnten, erneut zu untersuchen, wobei für benachbarte Phoneme, für die bereits eine Phonemeinheit existiert, diese eingesetzt wird. Optional ist es auch möglich, daß die bisher ermittelten Graphemeinheiten berücksichtigt werden. Sollte von dieser Option kein Gebrauch gemacht werden, können hier Graphemeinheiten erneut gemäß den Methoden nach den Schritten S4, S6 und S8 gebildet werden.

Ein Wort, das die Zuordnung gemäß dem Schritt S14 zeigt, ist das englische Wort "accumulated":

| | | | | | | | | | | |
|---|---|---|---|---|---|---|---|---|---|---|
| Grapheme | a | cc | u | m | u | l | a | t | e | d |
| Phoneme | x | k | yu | m | yx | l | e | t | I | d |

Bei diesem Wort werden zunächst die Phoneme "y" und "u" bzw. "y" und "x" durch die Phonemeinheiten "yu" bzw. "yx" ersetzt. Da diese Phonemeinheiten bereits bei den vorhergehenden Schritten ermittelt worden sind, wird im Schritt S14 von der Option Gebrauch gemacht, daß auch die Graphemeinheiten berücksichtigt werden, so wird für die beiden Grapheme "c" und "c" die Graphemeinheit "cc" verwendet. Die paarweise Zuordnungen der einzelnen Grapheme bzw. Graphemeinheiten zu den einzelnen Phonemen bzw. Phonemeinheiten ergibt eine korrekte Zuordnung.

Wird von der Option der Berücksichtigung der Graphemeinheiten kein Gebrauch gemacht, so werden, wie es im Schritt S6 der Fall ist, die einzelnen Grapheme den einzelnen Phonemen bzw. Phonemeinheiten zugeordnet, wobei im vorliegenden Fall bei der Zuordnung des Graphems "c" zu der Phonemeinheit "yu" eine zu den bisherigen Zuordnungen widersprüchliche Zuordnung erfolgt. Diese widersprüchliche Zuordnung wird festgestellt und das Graphem "c" wird mit dem vorhergehenden Graphem "c" zu "cc" zusammengefaßt. Dies führt wiederum zu einer korrekten Zuordnung der Grapheme zu den Phonemen.

Im Schritt S15 wird wiederum geprüft, ob widersprüchliche Zuordnungen erfolgt sind. Werden derartige widersprüchliche Zuordnungen festgestellt, werden sie und die weiteren Zuordnungen des jeweiligen Wortes gelöscht.

Mit dem Schritt S16 wird das Verfahren beendet.

Die Anzahl der im Schritt S15 ermittelten widersprüchlichen Zuordnungen ist ein Merkmal für die Qualität der Aufbereitung der Ausgangsdatenbank zu der durch das Verfahren erhaltenen Datenbank mit den einzelnen Graphem-Phonem-Zuordnungen.

Das erfindungsgemäße Verfahren konnte schon sehr erfolgreich zur automatischen Erstellung einer Datenbank für die deutsche Sprache eingesetzt werden, wobei eine Zuordnungsdatenbank mit insgesamt 47 Phonemen und 92 Graphemen aufgebaut worden ist. Bei der Erstellung der Datenbank für die englische Sprache, die eine wesentlich kompliziertere Graphem-Phonem-Zuordnung besitzt, ergaben sich 62 Phoneme und 222 Grapheme, deren Zuordnungen nicht so gut wie bei der deutschen Sprache war. Die größere Anzahl von Graphemen in der englischen Sprache macht deren Bearbeitung kompliziert. Es kann deshalb zweckmäßig sein, ein Null-Phonem einzuführen, das heißt ein Phonem ohne einen Laut. Ein derartiges Null-Phonem kann z.B. der englischen Graphemeinheit "gh" zugeordnet werden, das in der englischen Sprache stimmlos in Kombination mit den Graphemen "ei", "ou" und "au" vorkommt. Würde man kein derartiges Null-Phonem einführen, müßte man zusätzlich zu den Graphemen "ei", "ou" und "au" die Phoneme "eigh", "ough" und "augh" einführen. Das Null-Phonem erlaubt eine Verringerung der Anzahl der Grapheme, da "eigh", "ough" und "augh" jeweils durch "ei", "ou" und "au" in Kombination mit "gh" ersetzt werden können. Hierdurch kann die Zuverlässigkeit des Verfahrens gesteigert werden. Insbesondere erlaubt eine geringere Anzahl von Phonemen bzw. Graphemen eine einfachere, schnellere und zuverlässigere Anwendung bei einem neuronalen Netzwerk, das mittels der mit dem erfindungsgemäßen Verfahren erstellten Datenbank trainiert wird.

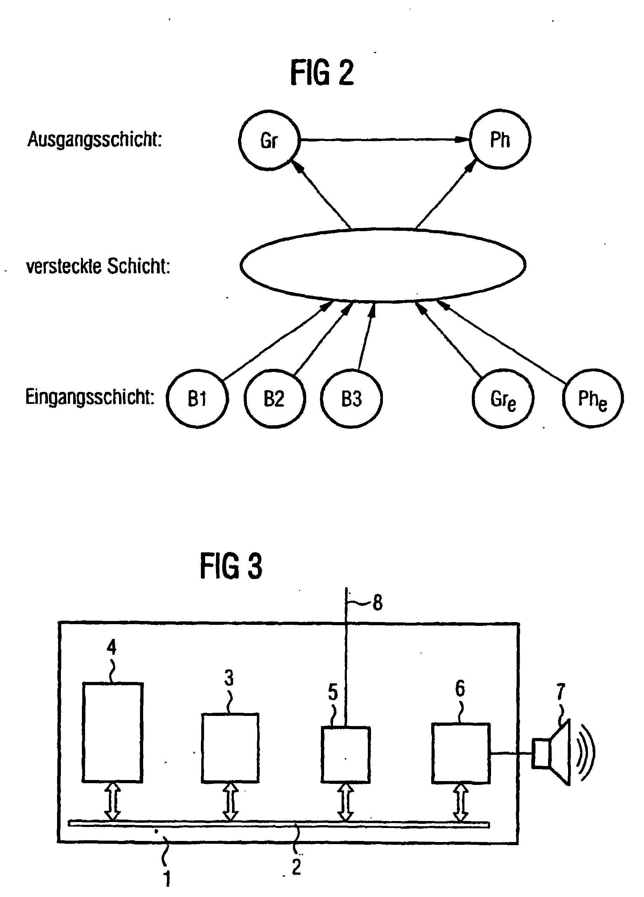

Ein solches neuronales Netzwerk ist in Fig. 2 schematisch vereinfacht dargestellt, das fünf Eingangsknoten und zwei Ausgangsknoten aufweist. An drei der fünf Eingangsknoten werden drei aufeinanderfolgende Buchstaben B1, B2 und B3 eines Wortes, das in Phoneme umgesetzt werden soll, eingegeben. Auf der Ausgangsseite gibt es zwei Knoten, wobei einer der beiden das jeweilige Phonem Ph und der andere Knoten eine Gruppierung Gr ausgibt. An den beiden weiteren Eingangsknoten wird die zuletzt ausgegebene Gruppierung Gr₁ und das zuletzt ausgegebene Phonem Ph₁ eingegeben.

Dieses Netzwerk wird mit den Wörtern der mit dem erfindungsgemäßen Verfahren aufbereiteten Datenbank trainiert, deren Graphem-Phonem-Zuordnungen keinen Widerspruch zu den übrigen Graphem-Phonem-Zuordnungen darstellen, das heißt, den Wörtern, deren Grapheme korrekt den Phonemen zugeordnet werden konnten.

Das neuronale Netzwerk ermittelt jeweils für den mittleren Buchstaben B2 ein Phonem, wobei der jeweils im Kontext vorhergehenden und nachfolgende Buchstabe und das dem zu ermittelnden Phonem vorhergehende Phonem Ph₁ berücksichtigt werden. Stellen die beiden aufeinanderfolgenden Buchstaben B2 und B3 eine Graphemeinheit dar, so ergibt sich eine Ausgabe für die Gruppierung Gr von zwei. Ist der Buchstabe B2 kein Bestandteil einer aus mehreren Buchstaben bestehenden Graphemeinheit, so wird als Gruppierung Gr eine eins ausgegeben.

Auf der Eingangsseite wird die jeweils letzte Gruppierung Gr₁ berücksichtigt, wobei im Falle einer Gruppierung von Gr₁ von zwei dem mittleren Buchstaben B2 kein Phonem Ph zugeordnet wird, da dieser Buchstabe bereits mit der letzten Graphemeinheit berücksichtigt worden ist. In diesem Fall wird der zweite Buchstabe der Gruppierung übersprungen.

Beim Training des neuronalen Netzwerkes werden, wie es an sich bekannt ist, jeweils die Werte für die Eingangsknoten und für die Ausgangsknoten dem neuronalen Netzwerk vorgegeben, wodurch sich das neuronale Netzwerk die jeweiligen Zuordnungen im Kontext der Wörter aneignet.

Es kann zweckmäßig sein, mehr als drei Buchstaben an der Eingangsseite des neuronalen Netzwerkes vorzusehen, insbesondere bei Sprachen, wie der englischen Sprache, in welcher mehrere Buchstaben zur Darstellung eines einzigen Lautes verwendet werden. Für die deutsche Sprache ist es zweckmäßig an der Eingangsseite drei oder fünf Knoten zur Eingabe von Buchstaben vorzusehen, wohingegen für die englische Sprache fünf, sieben oder sogar neun Knoten zur Eingabe von Buchstaben zweckmäßig sein können. Bei neun Knoten können Graphemeinheiten mit bis zu fünf Buchstaben behandelt werden.

Ist das neuronale Netzwerk einmal mit der erfindungsgemäßen Datenbank trainiert worden, kann es zur automatischen Erzeugung von Sprache verwendet werden. Eine Vorrichtung zum Erzeugen von Sprache, in der das erfindungsgemäße neuronale Netzwerk eingesetzt werden kann, ist schematisch in Fig. 3 gezeigt.

Diese Vorrichtung ist eine elektronische Datenverarbeitungsvorrichtung 1 mit einem internen Bus 2, an dem eine zentrale Prozessoreinheit 3, eine Speichereinheit 4, ein Interface 5 und eine akustische Ausgabeeinheit 6 angeschlossen sind. Das Interface 5 kann über eine Datenleitung 8 eine Verbindung zu einer weiteren elektronischen Datenverarbeitungsvorrichtung herstellen. An der akustischen Ausgabeeinheit 6 ist ein Lautsprecher 7 angeschlossen.

In der Speichereinheit 4 ist das erfindungsgemäße neuronale Netzwerk in Form eines Computerprogrammes abgespeichert, das mittels der zentralen Prozessoreinheit 3 zur Ausführung gebracht werden kann. Ein Text, der der elektronischen Datenverarbeitungsvorrichtung auf beliebige Weise, z.B. über das Interface 5, zugeführt wird, kann dann mit einem entsprechenden Hilfsprogramm dem neuronalen Netzwerk zugeführt werden, das die Grapheme, bzw. Buchstaben des Textes in entsprechende Phoneme umsetzt. Diese Phoneme werden in einer Phonem-Datei gespeichert, die über den internen Bus 2 an die akustische Ausgabeeinheit 6 weitergegeben wird, mit der die einzelnen Phoneme in elektrische Signale umgesetzt werden, die vom Lautsprecher 7 in akustische Signale gewandelt werden.

Mit einer solchen elektronischen Datenverarbeitungsvorrichtung 1 kann auch das erfindungsgemäße Verfahren zum Aufbereiten einer Datenbank ausgeführt werden, wobei das Verfahren wiederum in Form eines Computerprogrammes im Speicher 4 gespeichert ist und von der zentralen Prozessoreinheit 3 zur Ausführung gebracht wird, wobei es eine Ausgangsdatenbank, die ein Wörterbuch in Schreib- und Lautschrift darstellt, in eine Datenbank aufbereitet, in der die einzelnen Laute, die Phoneme, den einzelnen Buchstaben bzw. Buchstabenkombinationen, den Graphemen zugeordnet sind.

Die Zuordnung der einzelnen Grapheme zu den einzelnen Phonemen kann in der aufbereiteten Datenbank durch Leerzeichen gespeichert werden, die zwischen den einzelnen Phonemen und Graphemen eingefügt werden.

Die das erfindungsgemäße Verfahren bzw. das neuronale Netzwerk darstellenden Computerprogramme können auch auf beliebige elektronisch lesbare Datenträger gespeichert werden und so auf eine weitere elektrische Datenverarbeitungsvorrichtung übertragen werden.

Die Erfindung ist oben anhand eines Ausführungsbeispieles Beschrieben, mit dem eine Datenbank für die Sprachsynthese erzeugt wird. Im Rahmen der Erfindung ist es selbstverständlich auch möglich, die erfindungsgemäß erzeugte Datenbank bei der Spracherkennung zu verwenden, da Spracherkennungsverfahren oftmals Datenbanken mit Graphem-Phonem-Zuordnungen gebrauchen.

Eine Spracherkennung kann bspw. mit einem neuronalen Netzwerk ausgeführt werden, das mit der erfindungsgemäß erstellten Datenbank trainiert worden ist. An der Eingangsseite weist dieses neuronale Netzwerk vorzugsweise drei Eingangsknoten auf, an welchen das in ein Graphem umzusetzende Phonem eingegeben und falls vorhanden zumindest ein im Wort vorhergehendes und ein nachfolgendes Phonem eingegeben werden. An der Ausgangsseite weist das neuronale Netzwerk einen Knoten auf, an dem das dem Phonem zugeordnete Graphem ausgegeben wird.

Im Rahmen der Erfindung liegt somit jede Anwendung des Erstellens und Anwenden der erfindungsgemäß erstellten Datenbank im Bereich der automatischen Sprachverarbeitung.

## Patentansprüche

1. Verfahren zum Aufbereiten einer Datenbank für die automatische Sprachverarbeitung, bei welchem anhand der Wörter in Form von Graphemen und Phonemen enthaltenden Datenbank automatisch eine Zuordnung der Grapheme zu den Phonemen erstellt wird, umfassend folgende Schritte:
a) Zuordnen der Grapheme zu den Phonemen aller Wörter, die dieselbe Anzahl Grapheme und Phoneme besitzen, wobei die Grapheme und Phoneme einander paarweise zugeordnet werden,
b) Zuordnen der Grapheme zu den Phonemen aller Wörter, die mehr. Grapheme als Phoneme besitzen, wobei zunächst alle Grapheme den Phonemen paarweise zugeordnet werden, bis sich ein Zuordnungsfehler auf Grundlage der bisher ermittelten Zuordnungen ergibt oder lediglich am Wortende ein oder mehrere Grapheme vorhanden sind, die keinem Phonem zugeordnet sind, und Zusammenfassen mehrerer Grapheme zu einer Graphemeinheit und Zuordnen der Graphemeinheit zu einem Phonem, und
c) Zuordnen der Grapheme zu den Phonemen aller Wörter, die weniger Grapheme als Phoneme besitzen, wobei mehrere Phoneme zu einer Phonemeinheit zusammengefaßt werden und ihnen ein einziges Graphem derart zugeordnet wird, daß die übrigen Graphem-Phonem-Zuordnungen des zu analysierenden Wortes den unter a) und b) gefundenen Zuordnungen entsprechen,
d) Zuordnen der bisher nicht zuordbaren Wörter, wobei die Wörter nach den unter c) ermittelten Phonemeinheiten und/oder den unter b) ermittelten Graphemeinheiten von neuem untersucht werden und die Grapheme zu den Phonemen unter Berücksichtigung der Phonemeinheiten im Fall c und der Gra phemeinheiten im Fall b) zugeordnet werden, und
wobei zumindest nach Schritt a) ein Korrekturschritt ausgeführt wird, mit dem Zuordnungen von Wörtern, die im Widerspruch zu den im Schritt a) ermittelten weiteren Zuordnungen stehen, gelöscht werden.

2. Verfahren nach Anspruch 1,
**dadurch gekennzeichnet,**
**daß** nach jedem der Schritte a) bis d) ein Korrekturschritt ausgeführt wird, mit dem Zuordnungen von Wörtern, die im Widerspruch zu den in den jeweiligen Schritten bzw. Teilschritten ermittelten weiteren Zuordnungen stehen, gelöscht werden.

3. Verfahren nach Anspruch 1 oder 2,
**dadurch gekennzeichnet,**
**daß** der Korrekturschritt auf Grundlage einer Statistik ausgeführt wird, mit welcher die Häufigkeit der einzelnen Graphem-Phonem-Zuordnungen erfaßt wird, wobei mit dem Korrekturschritt ermittelt wird, welche Zuordnungen eine Häufigkeit aufweisen, die unter einem vorbestimmten Schwellwert liegt, und diese Zuordnungen löscht.

4. Verfahren nach Anspruch 3,
**dadurch gekennzeichnet,**
**daß** die Wörter, die eine gelöschte Zuordnung enthalten als nicht zugeordnet markiert werden, so daß sie bei einem der nachfolgenden Schritte wieder berücksichtigt werden können.

5. Verfahren nach einem der Ansprüche 1 bis 4,
**dadurch gekennzeichnet,**
**daß** beim Zuordnen der Grapheme zu den Phonemen aller Wörter, die weniger Grapheme als Phoneme besitzen, lediglich Vokale oder Konsonanten zu einer Phonemeinheit zusammengefaßt werden.

6. Verfahren nach einem der Ansprüche 1 bis 4,
**dadurch gekennzeichnet,**
**daß** beim Zuordnen der Grapheme zu den Phonemen aller Wörter, die weniger Grapheme als Phoneme besitzen, zunächst Vokale oder Konsonanten in einer Phonemeinheit zusammengefaßt und entsprechend dem Schritt c) zugeordnet werden, und falls weiterhin Wörter, die weniger Grapheme als Phoneme besitzen, nicht zugeordnet werden können, auch Vokale mit Konsonanten zu einer Phonemeinheit zusammengefaßt und entsprechend dem Schritt c) zugeordnet werden.

7. Verfahren nach einem der Ansprüche 1 bis 6,
**dadurch gekennzeichnet,**
**daß** beim Zuordnen der Grapheme zu den Phonemen aller Wörter, die mehr Grapheme als Phoneme besitzen, das oder die restlichen, am Wortende vorgesehenen Grapheme, zusammen mit dem letzten Graphem, das dem letzten Phonem des Wortes zugeordnet worden ist, zu einer Graphemeinheit zusammengefaßt wird und die dem letzten Phonem des Wortes zugeordnet wird.

8. Verfahren nach Anspruch 7,
**dadurch gekennzeichnet,**
**daß** falls sich ein Zuordnungswiderspruch auf Grundlage der bisher ermittelten Zuordnungen ergibt, an die längste zuordnungswiderspruchsfreie Kette von Graphemen das nächste Graphem mit dem letzten Graphem der Kette zu einer Graphemeinheit zusammengefaßt und die Zuordnung erneut versucht wird, wobei falls wiederum keine Graphem-Phonem-Zuordnung erstellt werden kann, das nächste Graphem mit der zuletzt gebildeten Graphemeinheit zusammengefaßt und die Zuordnung erneut versucht wird.

9. Verfahren nach Anspruch 8,
**dadurch gekennzeichnet,**
**daß**, falls keine Graphem-Phonem-Zuordnung eines Wortes mit mehreren Graphemen als Phonemen erzielt werden kann, die Zuordnung zunächst mit einer am Anfang des Wortes beginnenden paarweisen Zuordnung gestartet wird, bis sich ein Zuordnungswiderspruch auf Grundlage der bisher ermittelten Zuordnungen ergibt, worauf eine am Ende des Wortes beginnende paarweise Zuordnung ausgeführt wird, und wenn lediglich ein einzelnes nicht zugeordnetes Phonem übrig bleibt, werden die restlichen Grapheme zu einer Graphemeinheit zusammengefaßt und dem einen nicht zugeordnetem Phonem zugeordnet.

10. Verfahren zum Trainieren eines neuronalen Netzwerkes zum Zuordnen von Graphemen zu Phonemen für die automatische Sprachverarbeitung,
**dadurch gekennzeichnet,**
**daß** das neuronale Netzwerk mit einer nach dem Verfahren der Ansprüche 1 bis 9 aufbereiteten Datenbank trainiert wird, wobei die Grapheme an Eingangsknoten und die zugehörigen Phoneme an einem Ausgangsknoten des neuronalen Netzwerkes eingegeben werden.

11. Verfahren zum Zuordnen von Graphemen zu Phonemen bei der Synthetisierung von Sprache,
**dadurch gekennzeichnet,**
**daß** die Graphem-Phonem-Zuordnung durch eine Zuordnung eines Ausgangsmusters zu einem Eingangsmusters des nach dem Verfahren des Anspruchs 10 trainiertem neuronalen Netzwerkes ausgeführt wird, wobei das Eingangsmuster zumindest den zuzuordnenden Buchstaben und falls vorhanden zumindest einen im Wort vorhergehenden und einen nachfolgenden Buchstaben umfaßt und das Ausgangsmuster ein Phonem aufweist.

12. Verfahren nach Anspruch 11,
**dadurch gekennzeichnet,**
**daß** das Eingangsmuster mehrere dem zuzuordnenden Buchstaben vorhergehende und nachfolgende Buchstaben umfaßt, wobei es vorzugsweise jeweils drei vorhergehende und nachfolgende Buchstaben umfaßt.

13. Verfahren nach Anspruch 11 oder 12,
**dadurch gekennzeichnet,**
**daß** das Eingangsmuster das letzte Ausgangsmuster umfaßt.

14. Verfahren nach einem der Ansprüche 11 bis 13,
**dadurch gekennzeichnet,**
**daß** das Ausgangsmuster eine Gruppierung der Buchstaben, d.h., die Anzahl der zu einer Graphemeinheit im Eingangsmuster zusammengefaßten Buchstaben aufweist.

15. Verfahren zum Zuordnen von Phonemen zu Graphemen bei der Erkennung von Sprache,
**dadurch gekennzeichnet,**
**daß** die Graphem-Phonem-Zuordnung durch eine Zuordnung eines Ausgangsmusters zu einem Eingangsmusters des nach dem Verfahren des Anspruchs 10 trainiertem neuronalen Netzwerkes ausgeführt wird, wobei das Eingangsmuster zumindest das zuzuordnende Phonem und falls vorhanden ein im Wort vorhergehendes und ein nachfolgendes Phonem umfaßt und das Ausgangsmuster einen Buchstaben aufweist.

16. Neuronales Netzwerk für die automatische Sprachverarbeitung, mit welchem automatisch eine Zuordnung zwischen Graphemen und Phonemen hergestellt werden kann,
**dadurch gekennzeichnet,**
**daß** das neuronale Netzwerk gemäß dem Verfahren nach Anspruch 10 trainiert worden ist.

17. Neuronales Netzwerk nach Anspruch 16,
**dadurch gekennzeichnet,**
**daß** es auf einem elektronisch lesbaren Datenträger gespeichert ist

## Claims

1. Method for conditioning a database for automatic speech processing in which, using the database which contains words in the form of graphemes and phonemes, an assignment of the graphemes to the phonemes is brought about automatically, comprising the following steps:
a) the graphemes are assigned to the phonemes of all the words which have the same number of graphemes and phonemes, the graphemes and phonemes being assigned to one another in pairs,
b) the graphemes are assigned to the phonemes of all the words which have more graphemes than phonemes, all the graphemes being firstly assigned to the phonemes in pairs until an assignment error occurs owing to the previously determined assignments, or it is merely the case that one or more graphemes which are not assigned to any phoneme are present at the end of a word, and a plurality of graphemes are combined to form one grapheme unit and the grapheme unit is assigned to a phoneme, and
c) the graphemes are assigned to the phonemes of all the words which have fewer graphemes than phonemes, a plurality of phonemes being combined to form one phoneme unit and a single grapheme being assigned to them in such a way that the other grapheme/phoneme assignments of the word to be analysed correspond to the assignments found in a) and b),
d) the words which could not previously be assigned are assigned, the words in accordance with the phoneme units determined in c) and/or in accordance with the grapheme units determined in b) being examined again, and the graphemes being assigned to the phonemes taking into account the phoneme units in the case c), and the grapheme units in the case b), and
a correction step, with which assignments of words which contradict the further assignments determined in step a) are deleted, being carried out at least subsequent to step a).

2. Method according to Claim 1, **characterized in that** a correction step, with which assignments of words which contradict the further assignments determined in the respective steps or component steps are deleted, is carried out subsequent to each of steps a) to d).

3. Method according to Claim 1 or 2, **characterized in that** the correction step is carried out on the basis of a statistic with which the frequency of the individual grapheme/phoneme assignments is sensed, the correction step determining which assignments have a frequency which is less than a predetermined threshold value, and deleting these assignments.

4. Method according to Claim 3, **characterized in that** the words which contain a deleted assignment are marked as not assigned so that they can be taken into account again during one of the subsequent steps.

5. Method according to one of Claims 1 to 4, **characterized in that** when the graphemes are assigned to the phonemes of all the words which have fewer graphemes than phonemes, only vowels or consonants are combined to form one phoneme unit.

6. Method according to one of Claims 1 to 4, **characterized in that** when the graphemes are assigned to the phonemes of all the words which have fewer graphemes than phonemes, firstly vowels or consonants are combined in one phoneme unit and assigned in accordance with the step c), and if it continues to be impossible to assign words which have fewer graphemes than phonemes, vowels are also combined with consonants to form one phoneme unit and are assigned in accordance with the step c).

7. Method according to one of Claims 1 to 6, **characterized in that** when the graphemes are assigned to the phonemes of all the words which have more graphemes than phonemes, the remaining grapheme or graphemes which is/are provided at the end of a word is/are combined with the last grapheme which was assigned to the last phoneme of the word to form one grapheme unit which is assigned to the last phoneme of the word.

8. Method according to Claim 7, **characterized in that**, if an assignment contradiction comes about owing to the previously determined assignment, at the longest chain of graphemes which is free of assignment contradictions the next grapheme is combined with the last grapheme of the chain to form one grapheme unit and the assignment is attempted again, and if it is impossible once more to bring about a grapheme/phoneme assignment the next grapheme is combined with the last grapheme unit formed and the assignment is attempted again.

9. Method according to Claim 8, **characterized in that**, if it is not possible to bring about a grapheme/phoneme assignment of a word with a plurality of graphemes as phonemes, the assignment is firstly started with a paired assignment starting at the beginning of the word until an assignment contradiction comes about owing to the previously determined assignments, after which a paired assignment starting at the end of the word is carried out, and if only a single phoneme which cannot be assigned remains, the remaining graphemes are combined to form one grapheme unit and assigned to the one phoneme which is not assigned.

10. Method for training a neural network to assign graphemes to phonemes for automatic speech processing, **characterized in that** the neural network is trained using a database which is conditioned according to the method of Claims 1 to 9, the graphemes being input at input nodes and the associated phonemes being input at an output node of the neural network.

11. Method for assigning graphemes to phonemes when synthesizing speech, **characterized in that** the grapheme/phoneme assignment is carried out by assigning an output pattern to an input pattern of the neural network which is trained according to the method in Claim 10, the input pattern comprising at least the letter to be assigned, and if present at least one preceding letter in the word and one following letter, and the output pattern having one phoneme.

12. Method according to Claim 11, **characterized in that** the input pattern comprises a plurality of letters which precede the letter to be assigned, and following letters, said pattern preferably comprising in each case three preceding and three following letters, respectively.

13. Method according to Claim 11 or 12, **characterized in that** the input pattern comprises the last output pattern.

14. Method according to one of Claims 11 to 13, **characterized in that** the output pattern has a grouping of letters, i.e. the number of letters combined to form a grapheme unit in the input pattern.

15. Method for assigning phonemes to graphemes when recognizing speech, **characterized in that** the grapheme/phoneme assignment is carried out by assigning an output pattern to an input pattern of the neural network which is trained according to the method in Claim 10, the input pattern comprising at least the phoneme to be assigned, and if present a preceding phoneme in the word and a following phoneme, and the output pattern having one letter.

16. Neural network for automatic speech processing with which an assignment between graphemes and phonemes can be brought about automatically, **characterized in that** the neural network has been trained according to the method in Claim 10.

17. Neural network according to Claim 16, **characterized in that** it is stored on an electronically readable data carrier.

## Revendications

1. Procédé de préparation d'une base de données pour le traitement automatique du langage, avec lequel on établit automatiquement, à l'aide de la base de données contenant des mots sous forme de graphèmes et de phonèmes, une association des graphèmes aux phonèmes, comprenant les étapes suivantes :
a) association des graphèmes aux phonèmes de tous les mots possédant le même nombre de graphèmes et de phonèmes, les graphèmes et les phonèmes étant associés les uns aux autres par paires,
b) association des graphèmes aux phonèmes de tous les mots possédant plus de graphèmes que de phonèmes, tous les graphèmes étant d'abord associés par paires aux phonèmes jusqu'à ce qu'une erreur d'association se produise sur la base des associations précédemment déterminées ou simplement qu'il reste à la fin du mot un ou plusieurs graphème(s) qui n'est/ne sont associé/s à aucun phonème, et groupement de plusieurs graphèmes pour former une unité graphémique et association de l'unité graphémique à un phonème, et
c) association des graphèmes aux phonèmes de tous les mots possédant moins de graphèmes que de phonèmes, plusieurs phonèmes étant groupés pour former une unité phonémique et un graphème unique leur étant associé, de manière à ce que les associations graphème-phonème restantes du mot à analyser correspondent aux associations trouvées aux étapes a) et b),
d) association des mots n'ayant pu faire l'objet d'associations à ce stade, les mots étant réexaminés en fonction des unités phonémiques déterminées à l'étape c) et/ou des unités graphémiques déterminées à l'étape b) et les graphèmes étant associés aux phonèmes en tenant compte des unités phonémiques dans le cas c) et des unités graphémiques dans le cas b), et
une étape de correction étant exécutée au moins après l'étape a), grâce à laquelle les associations de mots entrant en contradiction avec les autres associations déterminées dans l'étape a) sont éliminées.

2. Procédé selon la revendication 1,
**caractérisé en ce**
**qu'**une étape de correction est exécutée après chacune des étapes a) à d), grâce à laquelle les associations de mots entrant en contradiction avec les autres associations déterminées dans les étapes resp. étapes partielles respectives sont éliminées.

3. Procédé selon la revendication 1 ou 2,
**caractérisé en ce que**
l'étape de correction est exécutée sur la base d'une statistique au moyen de laquelle on enregistre la fréquence des différentes associations graphème-phonème, l'étape de correction permettant de déterminer quelles associations présentent une fréquence inférieure à une valeur seuil prédéterminée, et d'éliminer ces associations.

4. Procédé selon la revendication 3,
**caractérisé en ce que**
les mots qui contiennent une association éliminée sont marqués comme n'ayant pas fait l'objet d'associations, de manière à ce qu'ils puissent être pris en compte à nouveau lors d'une des étapes suivantes.

5. Procédé selon l'une des revendications 1 à 4,
**caractérisé en ce que**,
lors de l'association des graphèmes aux phonèmes de tous les mots possédant moins de graphèmes que de phonèmes, seules des voyelles ou des consonnes sont groupées pour former une unité phonémique.

6. Procédé selon l'une des revendications 1 à 4,
**caractérisé en ce que**,
lors de l'association des graphèmes aux phonèmes de tous les mots possédant moins de graphèmes que de phonèmes, on groupe d'abord des voyelles ou des consonnes pour former une unité phonémique et on les associe conformément à l'étape c) et, dans le cas où, en outre, des mots possédant moins de graphèmes que de phonèmes ne peuvent pas faire l'objet d'associations, on groupe également des voyelles avec des consonnes pour former une unité phonémique et on les associe conformément à l'étape c).

7. Procédé selon l'une des revendications 1 à 6,
**caractérisé en ce que**,
lors de l'association des graphèmes aux phonèmes de tous les mots possédant plus de graphèmes que de phonèmes, le ou les graphème/s restant/s prévu/s à la fin du mot est/sont groupé/s avec le dernier graphème ayant été associé au dernier phonème du mot pour former une unité graphémique et celle-ci est associée au dernier phonème du mot.

8. Procédé selon la revendication 7,
**caractérisé en ce que**,
dans le cas où survient une contradiction d'association sur la base des associations précédemment déterminées, le graphème qui suit la plus longue chaîne de graphèmes ne comportant pas de contradiction d'association est groupé avec le dernier graphème de cette chaîne pour former une unité graphémique et l'association est à nouveau éprouvée, le graphème suivant étant groupé, dans le cas où il est à nouveau impossible d'établir une association graphème-phonème, avec la dernière unité graphémique formée et l'association étant à nouveau éprouvée.

9. Procédé selon la revend ication 8,
**caractérisé en ce que**,
dans le cas où on n'arrive pas à établir une association graphème-phonème d'un mot possédant plus de graphèmes que de phonèmes, on démarre l'association en procédant d'abord à une association par paires commençant au début du mot jusqu'à ce qu'apparaisse une contradiction d'association sur la base des associations précédemment déterminées, après quoi on procède à une association par paires qui commence à la fin du mot et lorsqu'il ne reste qu'un seul phonème n'ayant pas fait l'objet d'une association, les graphèmes restants sont groupés pour former une unité graphémique et associés au phonème n'ayant pas fait l'objet d'une association.

10. Procédé d'apprentissage d'un réseau de neurones destiné à associer des graphèmes à des phonèmes pour le traitement automatique du langage,
**caractérisé en ce que**
l'apprentissage du réseau de neurones se déroule avec une base de données préparée selon le procédé des revendications 1 à 9, les graphèmes étant entrés au niveau de noeuds d'entrée et les phonèmes correspondants au niveau d'un noeud de sortie du réseau de neurones.

11. Procédé d'association de graphèmes à des phonèmes pour la synthèse vocale,
**caractérisé en ce que**
l'association graphème-phonème est exécutée en associant un modèle de sortie à un modèle d'entrée du réseau de neurones dont l'apprentissage s'est déroulé selon le procédé de la revendication 10, le modèle d'entrée comprenant au moins la lettre à associer et, le cas échéant, au moins une lettre la précédant et une la suivant dans le mot et le modèle de sortie comprenant un phonème.

12. Procédé selon la revendication 11,
**caractérisé en ce que**
le modèle d'entrée comprend plusieurs lettres précédant et suivant la lettre à associer, le modèle comprenant de préférence, à chaque fois, trois lettres précédentes et suivantes.

13. Procédé selon la revendication 11 ou 12,
**caractérisé en ce que**
le modèle d'entrée comprend le dernier modèle de sortie.

14. Procédé selon l'une des revendications 11 à 13,
**caractérisé en ce que**
le modèle de sortie comprend un groupement de lettres, c'est-à-dire le nombre de lettres groupées pour former une unité graphémique dans le modèle d'entrée.

15. Procédé d'association de phonèmes à des graphèmes pour la reconnaissance vocale,
**caractérisé en ce que**
l'association graphème-phonème est exécutée en associant un modèle de sortie à un modèle d'entrée du réseau de neurones dont l'apprentissage s'est déroulé selon le procédé de la revendication 10, le modèle d'entrée comprenant au moins le phonème à associer et, le cas échéant, un phonème le précédant et un le suivant dans le mot et le modèle de sortie comprenant une lettre.

16. Réseau de neurones pour le traitement automatique du langage à l'aide duquel on peut établir automatiquement une association entre des graphèmes et des phonèmes,
**caractérisé en ce que**
le réseau de neurones a fait l'objet d'un apprentissage conformément au procédé selon la revendication 10.

17. Réseau de neurones selon la revendication 16,
**caractérisé en ce**
**qu'**il est enregistré sur un support de données lisible électroniquement.
